# EUROPÄISCHE PATENTANMELDUNG

(11) **EP 1 220 104 A2**
(43) Veröffentlichungstag der Anmeldung: **03.07.2002**
(21) Anmeldenummer: 01125718.5
(22) Anmeldetag: 27.10.2001
(51) Int. Cl.: G06F 13/42

(54) **Verfahren und Kommunikationssystem zum Austausch von Daten zwischen mindestens zwei Teilnehmern über ein Bussystem**

(30) Priorität: 28.12.2000 DE 10065117
(71) Anmelder: ROBERT BOSCH GMBH, 70442 Stuttgart (DE)
(72) Erfinder: Fuehrer, Thomas, 70839 Gerlingen (DE); Müller, Bernd, Dr., 71229 Leonberg (DE)

(57) **Zusammenfassung**

Die Erfindung betrifft ein Verfahren und ein Kommunikationssystem (1) zum Austausch von Daten zwischen mindestens zwei Teilnehmern (2, 3, 4), die mittels eines verteilt arbeitenden Bussystems (5) miteinander in Verbindung stehen. Die Daten sind in Nachrichten enthalten, die von den Teilnehmern (2, 3, 4) über das Bussystem (5) übertragen werden. Für die Teilnehmer (2, 3, 4) des Bussystems (5) liegt eine gemeinsame globale Zeitbasis (t_gl) vor, die zu einem vorgebbaren Zeitpunkt (t_sync) auf eine externe Referenzzeit (t_ref) synchronisiert wird. Um in dem Kommunikationssystem (1) eine gesicherte Synchronisation der globalen Zeitbasis (t_gl) auf die externe Referenzzeit (t_ref), insbesondere ohne die Eigenschaften der globalen Zeitbasis (t_gl) zu zerstören, d. h. ohne Sprünge in der globalen Zeit (t_gl) oder eine rückläufige globale Zeit (t_gl) zu verursachen, zu ermöglichen, wird vorgeschlagen, dass die Teilnehmer (2, 3, 4) des Kommunikationssystems (1) über eine Korrektur der globalen Zeitbasis (t_gl) informiert werden, einem einheitlichen Korrekturwert (x) zustimmen und die externe Synchronisation, d. h. die Korrektur der globalen Zeitbasis (t_gl) synchronisiert umsetzen.

## Beschreibung

Die vorliegende Erfindung betrifft ein Verfahren und ein Kommunikationssystem zum Austausch von Daten zwischen mindestens zwei Teilnehmern, die mittels eines verteilt arbeitenden Bussystems miteinander in Verbindung stehen. Die Daten sind in Nachrichten enthalten, die von den Teilnehmern über das Bussystem übertragen werden. Für die Teilnehmer des Bussystems liegt eine gemeinsame globale Zeitbasis vor, die zu einem vorgebbaren Zeitpunkt auf eine externe Referenzzeit synchronisiert wird.

Die Erfindung betrifft außerdem ein verteilt arbeitendes Bussystem zum Austausch von Daten zwischen mindestens zwei Teilnehmern eines Kommunikationssystems.

Des Weiteren betrifft die vorliegende Erfindung ein Speicherelement für einen Teilnehmer eines Kommunikationssystems, der über ein verteilt arbeitendes Bussystem zum Austausch von Daten mit mindestens einem weiteren Teilnehmer in Verbindung steht. Das Speicherelement ist insbesondere als ein Read-Only-Memory, als ein Random-Access-Memory oder als ein Flash-Memory ausgebildet. Auf dem Speicherelement ist ein Computerprogramm abgespeichert, das auf einem Rechengerät des Teilnehmers des Kommunikationssystems, insbesondere auf einem Mikroprozessor, ablauffähig ist. Schließlich betrifft die Erfindung auch ein Computerprogramm.

### Stand der Technik

Der Einsatz von Kommunikationssystemen in einem Kraftfahrzeug setzt sich immer weiter durch. Die Society for Automotive Engineering (SAE) hat drei unterschiedliche Anforderungsklassen an die Kommunikation in einem Kraftfahrzeug definiert. Diese Klassen unterscheiden sich in der Priorität der Nachrichten, die ausgetauscht werden, bis hin zu den unterschiedlichen Echtzeitanforderungen und Anwendungsgebieten. Die Protokollklasse mit den höchsten Anforderungen wird als Klasse C bezeichnet. Hierzu existiert von der SAE eine Spezifikation "Kommunikationsprotokolle für Klasse C Anwendungen", SAE J2056/1, Juni 1993. Die Klasse C ist insbesondere für zukünftige Kraftfahrzeugfunktionen, wie Steer-By-Wire oder Brake-by-Wire, also allgemein für X-by-Wire-Systeme, von Bedeutung. Diese Funktionen stellen höchste Anforderungen an die Echtzeitfähigkeit und Sicherheit eines Kommunikationsprotokolles.

Nach dem Stand der Technik werden Controller Area Network (CAN)-Bussysteme, eventuell mit einer Erweiterung für X-by-Wire-Systeme, sowie Time Triggered Protocols for Class C (TTP/C) für den Einsatz in diesen sicherheitskritischen Kraftfahrzeugfunktionen herangezogen. Ein wesentliches Merkmal dieser Protokolle stellt die globale Zeitbasis dar, die für alle Teilnehmer des Bussystems vorliegt.

Die globale Zeitbasis stellt eine kommunikationssystemweit gültige Zeitbasis dar. Sie spielt für die Zeitsteuerung in der Kommunikation (vgl. insbesondere zeitgesteuerte Kommunikationsprotokolle wie z. B. TTP/C) und in der Applikation (vgl. zeitgesteuerte Betriebssysteme wie z. B. xERCOS der Robert Bosch GmbH), aber auch für Diagnosefunktionen und Fehlererkennung bzw. Fehlerbehandlung eine wichtige Rolle. Falls eine globale Zeitbasis zur Verfügung stehen soll, muss diese gemeinsame Zeitbasis prinzipiell für alle Teilnehmer des gesamten Kommunikationssystems vorhanden sein, unabhängig von der Zuständigkeit zur Bildung der globalen Zeitbasis. Die lokale Zeitbasis eines Teilnehmers muss mit der lokalen Zeitbasis der übrigen Teilnehmer des Bussystems synchronisiert sein. Diese Synchronisation erfolgt anhand der globalen Zeitbasis.

Die globale Zeitbasis stellt eine abstrakte Notation dar und kann von den lokalen Uhren in den Teilnehmern lediglich approximiert werden. Die Teilnehmer besitzen also eine lokale Sicht auf die globale Zeitbasis. Die einzelnen Teilnehmer sind lediglich über das Kommunikationssystem miteinander verbunden. Da die Verantwortung für die globale Zeitbasis somit nur dem Gesamtsystem zugeschrieben werden kann, sollte aus Gründen der Komplexität das Kommunikationssystem diese Verantwortung erhalten.

Die globale Zeitbasis kann prinzipiell nach zwei unterschiedlichen Modellen gebildet werden. Zum einen kann die globale Zeitbasis durch einen zentralen Master-Teilnehmer des Bussystems gebildet werden. Dieser Master verfügt über eine geeignete Funktionalität, um eine globale Zeitbasis bereitzustellen. Der Master sendet periodisch seine Sicht der globalen Zeitbasis an die übrigen Teilnehmer des Gesamtsystems. Die übrigen Teilnehmer übernehmen die Sicht des Masters auf die globale Zeitbasis als eigene globale Zeitbasis. Die Synchronisation der globalen Zeitbasis auf eine externe Referenzzeit stellt bei einem solchen Kommunikationssystem mit einem Master-Teilnehmer keine große Schwierigkeit dar, wenn der Master-Teilnehmer Zugriff auf die externe Referenzzeit hat.

Anders sieht dies jedoch bei der zweiten Möglichkeit zur Bildung der globalen Zeitbasis aus. Über einen in dem Kommunikationssystem verteilt arbeitenden Algorithmus, wie z. B. einen Fault-Tolerant-Average-Algorithm, werden die lokalen Sichten auf die globale Zeitbasis unter den Teilnehmern des Bussystems ausgetauscht, und aufgrund der empfangenen Werte wird eine Abweichung berechnet. Die Abweichung der eigenen Sicht von der globalen Zeitbasis wird während eines vorgebbaren Intervalls, dem sog. Resynchronisations-Intervall, korrigiert, um eine Synchronisation der Sichten der einzelnen Teilnehmer auf die globale Zeit zu erreichen. Bei einem solchen verteilt arbeitenden Bussystem ist die Synchronisation der globalen Zeitbasis auf eine externe Referenzzeit nicht ohne Weiteres möglich. Aufgrund der Synchronisation kann es nämlich zu einer fehlerbehafteten globalen Zeitbasis kommen, d. h. die globale Zeitbasis weist große Sprünge auf oder ist rückläufig.

Es ist deshalb die Aufgabe der vorliegenden Erfindung, in einem Kommunikationssystem mit einem verteilt arbeitenden Bussystem eine gesicherte Synchronisation der globalen Zeitbasis auf eine externe Referenzzeit, insbesondere ohne die Eigenschaften der globalen Zeitbasis zu zerstören, d. h. ohne Sprünge in der globalen Zeit oder eine rückläufige globale Zeit zu verursachen, zu ermöglichen.

Zur Lösung dieser Aufgabe schlägt die Erfindung ausgehend von dem Verfahren zum Datenaustausch der eingangs genannten Art vor, dass zur Sychronisation der globalen Zeitbasis auf die externe Referenzzeit
- von mindestens einem der Teilnehmer ein Zeitsignal der externen Referenzzeit empfangen wird;
- in dem mindestens einen Teilnehmer ein Korrektur-Wunschwert zwischen dem empfangenen Zeitsignal und der globalen Zeitbasis ermittelt wird;
- der Korrektur-Wunschwert an die übrigen Teilnehmer des Bussystems übertragen wird;
- in den Teilnehmern des Bussystems in Abhängigkeit des Korrektur-Wunschwerts ein Korrekturwert ermittelt wird; und
- in den Teilnehmern des Bussystems zu dem vorggebbaren Zeitpunkt die Synchronisation der globalen Zeitbasis auf die externe Referenzzeit in Abhängigkeit von dem ermittelten Korrekturwert und der globalen Zeitbasis ausgeführt wird.

### Vorteile der Erfindung

Die Basisfunktionalität eines Kommunikationssystems bzw. eines Kommunikationsprotokolls umfasst hier eine Nachrichtenübertragung und eine globale Zeitbasis, ggf. mit interner Uhrensynchronisation. Diese Basisfunktionalität eines Kommunikationssystems bzw. Kommunikationsprotokolls wird erfindungsgemäß um einen Mechanismus zur gesicherten Synchronisation der globalen Zeitbasis an eine externe Referenzzeit (externe Synchronisation) erweitert. Als externe Referenzzeit kann bspw. eine Global Positioning System (GPS)-Zeit oder eine Zeit des deutschen Langwellensenders Frankfurt (DCF) herangezogen werden.

Eine Anforderung für eine Synchronisation der globalen Zeitbasis auf die externe Referenzzeit wird durch eine auf einem Rechengerät, insbesondere auf einem Mikroprozessor, eines Teilnehmers des Bussystems ablaufende Applikation gestellt. Die Anforderung wird über eine Schnittstelle zwischen Rechengerät an den Kommunikationscontroller weitergegeben. Der Kommunikationscontroller, dem eine solche Anforderung vorliegt, muss eine Synchronisation der globalen Zeitbasis auf die externe Referenzzeit in dem gesamten Kommunikationssystem einleiten. Die einzelnen Sichten der Kommunikationscontroller der Teilnehmer des Kommunikationssystems auf die globale Zeitbasis werden gesichert an die externe Referenzzeit angepasst. Gesichert bedeutet, dass ausgeschlossen sein muss, dass die globale Zeitbasis oder für das Kommunikationssystem notwendige Eigenschaften der globalen Zeitbasis durch beliebige, eventuell auch fehlerhafte externe Einflüsse zerstört werden.

Die Synchronisation der globalen Zeit wird durch einen oder mehrere Kommunikationscontroller bewirkt. Die Controller aller Teilnehmer des Kommunikationssystems werden über eine notwendige Korrektur der lokalen Sichten auf die globale Zeitbasis informiert, stimmen einem einheitlichen Korrekturwert zu und setzen die externe Synchronisation, d. h. die Korrektur der globalen Zeitbasis, synchronisiert um.

In einem modernen Kraftfahrzeug spielt bereits heute eine Fehlerbehandlung und Eintragung von auftretenden Fehlern bzw. Fehlerbildern in einen Betriebsdatenspeicher mit einer Zeitinformation (einem sog. Zeitstempel) eine wichtige Rolle. Die Auswertung der Daten des Betriebsdatenspeichers kann besonders effizient und genau erfolgen, wenn die abgespeicherten Daten in Bezug zu einer externen Referenzzeit stehen. Um dies zu erreichen, wird die globale Zeitbasis erfindungsgemäß auf die externe Referenzzeit synchronisiert. Wenn die globale Zeitbasis mehrerer Kraftfahrzeugs auf eine gemeinsame Referenzzeit synchronisiert ist, kann z. B. der Unfallhergang eines komplexen Verkehrsunfalls ohne großen Aufwand durch Auswerten des Betriebsdatenspeichers rekonstruiert werden.

Die vorliegende Erfindung schlägt ein Synchronisationsverfahren vor, das eine gesicherte Synchronisation ermöglicht. Das bedeutet, dass durch die Synchronisation keine Sprünge in der globalen Zeitbasis auftreten, die globale Zeitbasis aufgrund der externen Synchronisation nicht einen Schritt rückwärts macht oder einzelne Teilnehmeruhren divergieren. Durch Einsatz des erfindungsgemäßen Verfahrens ist es ausgeschlossen, dass die Synchronisation der Teilnehmer untereinander durch den Einfluss einer eventuell fehlerhaften externen Referenzzeit gefährdet wird.

Die Realisierung der erfindungsgemäßen gesicherten externen Synchronisation kann bspw. mit einem Kraftfahrzeug-Steuergerät ausgeführt werden, das mit seinem Kommunikationscontroller an ein verteilt arbeitendes Bussystem angeschlossen ist und das über eine spezielle Software bzw. Schnittstelle Zugang zu der externen Referenzzeit besitzt.

Das erfindungsgemäße Verfahren geht von einem Kommunikationsystem-Netzwerk mit mehreren funktionsfähigen Teilnehmern aus, die untereinander mittels eines verteilt arbeitenden Bussystems in Verbindung stehen. Jeder Teilnehmer umfasst ein Rechengerät oder Prozessrechner, insbesondere einen Mikroprozessor, und einen Kommunikationscontroller. Zunächst liegt bei keinem der Teilnehmer eine Anforderung für eine Synchronisation der globalen Zeitbasis auf die externe Referenzzeit vor.

Gemäß einer vorteilhaften Weiterbildung der vorliegenden Erfindung wird vorgeschlagen, dass die Synchronisation der globalen Zeitbasis auf die externe Referenzzeit durch einen Vergleich der globalen Zeitbasis mit der externen Referenzzeit ausgelöst wird. Der Vergleich kann bspw. eine Differenzbildung zwischen der globalen Zeitbasis und der externen Referenzzeit sein.

Nach der Anforderung einer externen Synchronisation wird von mindestens einem der Teilnehmer des Bussystems ein Zeitsignal der externen Referenzzeit empfangen. In dem mindestens einen Teilnehmer wird dann ein Korrektur-Wunschwert zwischen dem empfangenen Zeitsignal und der globalen Zeitbasis ermittelt. Die Ermittlung des Korrektur-Wunschwertes erfolgt vorzugsweise in dem Rechengerät, insbesondere in dem Mikroprozessor, des Teilnehmers. Von dem mindestens einen Teilnehmer wird der ermittelte Korrektur-Wunschwert dann an die übrigen Teilnehmer des Bussystems übertragen. Dazu wird der Korrektur-Wunschwert von dem Rechengerät des Teilnehmers über eine Schnittstelle an den Kommunikationscontroller weitergegeben. Dieser Schritt kann in dem Rechengerät eines jeden Teilnehmers des Bussystems ausgeführt werden, der Zugang zu der externen Referenzzeit besitzt. Dieser Schritt muss jedoch nicht notwendigerweise synchron in allen Teilnehmern geschehen. Vielmehr kann ein zeitlicher Rahmen vorgegeben werden, in dem mehrere Teilnehmer gleichzeitig oder nacheinander einen Korrektur-Wunschwert ermitteln und diesen an die übrigen Teilnehmer des Bussystems übertragen können.

Gemäß einer bevorzugten Ausführungsform der vorliegenden Erfindung wird vorgeschlagen, dass der Korrektur-Wunschwert an die übrigen Teilnehmer des Bussystems periodisch übertragen wird. Gemäß einer anderen bevorzugten Ausführungsform der vorliegenden Erfindung wird vorgeschlagen, dass der Korrektur-Wunschwert an die übrigen Teilnehmer des Bussystems beim Vorliegen eines von Null verschiedenen Korrektur-Wunschwerts übertragen wird. Gemäß noch einer anderen bevorzugten Ausführungsform der vorliegenden Erfindung wird vorgeschlagen, dass der Korrektur-Wunschwert an die übrigen Teilnehmer des Bussystems nach Aufforderung durch einen der übrigen Teilnehmer des Bussystems übertragen wird. Gemäß der letzten Ausführungsform kann bspw. ein Teilnehmer, der nicht über einen eigenen Zugang zu der externen Referenzzeit verfügt, die Übertragung eines Korrektur-Wunschwertes des mindestens einen Teilnehmers anfordern.

Der Korrektur-Wunschwert wird vorzugsweise über das Bussystem von dem mindestens einen Teilnehmer an die übrigen Teilnehmer des Bussystems übertragen. Dazu wird gemäß einer weiteren bevorzugten Ausführungsform der vorliegenden Erfindung vorgeschlagen, dass der Korrektur-Wunschwert in einer gesonderten Nachricht aufgenommen und die gesonderte Nachricht an die übrigen Teilnehmer des Bussystems übertragen wird.

Gemäß einer anderen bevorzugten Ausführungsform der vorliegenden Erfindung wird vorgeschlagen, dass der Korrektur-Wunschwert in einer Kontrollnachricht des Bussystems aufgenommen wird, die an die übrigen Teilnehmer des Bussystems übertragen wird. Als Beispiel für eine Kontrollnachricht kann ein sog. Initialisierungs-Frame (I-Frame) in dem TTP/C-Protokoll genannt werden. Ein I-Frame stellt die wichtigsten Informationen für einen Kommunikationscontroller bereit, die erst zu einem späteren Zeitpunkt in das Kommunikationssystem integriert werden. Die I-Frames werden periodisch von unterschiedlichen Kommunikationscontrollern gesendet.

Gemäß noch einer anderen bevorzugten Ausführungsform der vorliegenden Erfindung wird vorgeschlagen, dass der Korrektur-Wunschwert in den vorhandenen Kontrolldaten einer Datennachricht des Bussystems aufgenommen wird, die an die übrigen Teilnehmer des Bussystems übertragen wird.

Innerhalb eines Zeitfensters mit einer vorgebbaren Länge müssen nun alle Kommunikationscontroller der Teilnehmer des Bussystems, die Zugang zu der externen Referenzzeit haben, eine entsprechende Nachricht mit dem Korrektur-Wunschwert an die übrigen Teilnehmer übertragen. Dadurch wird eine Synchronisation der globalen Zeitbasis auf eine externe Referenzzeit mit mehr als einem Rechengerät (Prozessrechner) mit Zugang zu der externen Referenzzeit ermöglicht.

Auf diese Weise erhält jeder Kommunikationscontroller in dem Kommunikationssystem-Netzwerk, also auch die Kommunikationscontroller, die keinen Zugang zu der externen Referenzzeit haben, einen Vektor mit den zeitlichen Korrektur-Wunschwerten der Teilnehmer, die Zugang zu der externen Referenzzeit haben, als Vektorkomponenten.

Anschließend wird in jedem Teilnehmer des Bussystems ein tatsächlicher Korrekturwert in Abhängigkeit des Vektors mit den verschiedenen Korrektur-Wunschwerten ermittelt. Gemäß einer vorteilhaften Weiterbildung der vorliegenden Erfindung wird vorgeschlagen, dass der Korrekturwert in den Teilnehmern des Bussystems mit einer Fehlerkorrektur, vorzugsweise einer byzantinischen Fehlerkorrektur, in Abhängigkeit des Korrektur-Wunschwerts ermittelt wird. Dazu senden alle Kommunikationscontroller in dem Kommunikationssystem-Netzwerk, also auch die Controller, die keinen Zugang zu der externen Referenzzeit haben, jeweils eine Funktion ihrer Sicht auf den Vektor mit den Korrektur-Wunschwerten über das Bussystem. Die Funktion der Sicht eines Controllers auf den Vektor kann bspw. der ganze Vektor, ein Mittelwert der einzelnen Korrektur-Wunschwerte des Vektors oder ein sogenannter fehlertoleranter Mittelwert (Fault Tolerant Average) der Korrektur-Wunschwerte des Vektors sein.

Für einen fehlertoleranten Mittelwert werden bspw. die einzelnen Korrektur-Wunschwerte des Vektors sortiert, der kleinste und der größte Wert gestrichen und aus den verbleibenden Werten der fehlertolerante Mittelwert gebildet. Im Idealfall haben alle Kommunikationscontroller dieselbe Sicht auf den Vektor.

Mittels der in jedem Kommunikationscontroller zur Verfügung stehenden Informationen kann jeder -Controller über einen fehlertoleranten Algorithmus den Korrekturwert berechnen. Dieser Korrekturwert ist idealerweise bei allen Controllern gleich, sowohl im fehlerfreien Fall als auch im fehlerbehafteten Fall, bei dem die auftretenden Fehler durch den fehlertoleranten Algorithmus korrigiert werden können. Die Vorteile der Ermittlung des Korrekturwerts mit einer byzantinischen Fehlerkorrektur sind die guten Fehlerkorrektur- und Fehlerentdeckungseigenschaften. Ggf. kann bei nicht korrigierbaren Fehlern die Synchronisation der globalen Zeitbasis auf die externe Referenzzeit abgelehnt, d. h. bspw. der Korrekturwert auf Null gesetzt werden.

Selbstverständlich ist es auch möglich, den Korrekturwert in den Teilnehmern des Bussytems ohne eine Fehlerkorrektur in Abhängigkeit des Korrektur-Wunschwerts zu ermitteln. Dabei berechnet jeder Kommunikationscontroller über einen Algorithmus den Korrekturwert unmittelbar aus dem Vektor mit den Korrektur-Wunschwerten.

Sobald in jedem der Kommunikationscontroller ein Korrekturwert vorliegt, kann die Synchronisation der globalen Zeitbasis auf die externe Referenzzeit ausgeführt werden. Die Synchronisation sollte gleichzeitig in allen Kommunikationscontrollern angestoßen und innerhalb eines vorgebbaren Zeitintervalls beendet sein. Um große Sprünge der globalen Zeitbasis aufgrund der Synchronisation zu vermeiden, wird die globale Zeitbasis bei relativ großen Differenzen zwischen der globalen Zeitbasis und der externen Referenzzeit der externen Referenzzeit langsam, d. h. bspw. mit Sprüngen von +1, angenähert. Somit kann es einige Zeit dauern, bis die globale Zeitbasis den Wert der externen Referenzzeit erreicht hat. Theoretisch ist es sogar möglich, dass die globale Zeitbasis die externe Referenzzeit nicht innerhalb des vorgebbaren Zeitintervalls erreicht. Weitere Anforderungen an die Synchronisation sind, dass die globale Zeitbasis monoton wächst. Eine abnehmende globale Zeitbasis, was einer rückwärts laufenden Uhr entspräche, oder eine gleich bleibende Zeitbasis muss verhindert werden.

Gemäß einer vorteilhaften Weiterbildung der vorliegenden Erfindung wird vorgeschlagen, dass die Synchronisation der globalen Zeitbasis auf die externe Referenzzeit durch Addition des Korrekturwerts zu der globalen Zeitbasis ausgeführt wird. Alternativ wird vorgeschlagen, dass die Synchronisation der globalen Zeitbasis auf die externe Referenzzeit durch Multiplikation des Korrekturwertes mit der globalen Zeitbasis ausgeführt wird. Wenn bspw. nach mehreren Synchronisationsvorgängen festgestellt wird, dass die globale Zeitbasis stets um denselben Wert von der externen Referenzzeit abweicht, wäre es denkbar, als Korrekturwert einen Faktor zu bestimmen, der diese Abweichung ausgleicht. Der Korrekturwert könnte auch aus einer Kombination eines Faktors und eines Summanden bestehen, wobei der Faktor mit der globalen Zeitbasis multipliziert und der Summand als Offset zu der globalen Zeitbasis addiert wird.

Gemäß einer bevorzugten Ausführungsform der vorliegenden Erfindung wird vorgeschlagen, dass der vorgebbare Zeitpunkt zur Synchronisation der globalen Zeitbasis auf die externe Referenzzeit explizit vorgegeben wird. Alternativ wird vorgeschlagen, dass die Synchronisation der globalen Zeitbasis auf die externe Referenzzeit durch eine Übergabe des Korrekturwerts an einen Synchronisationsalogrithmus ausgelöst wird, wobei die Übergabe zu einem explizit vorgegebenen Zeitpunkt erfolgt.

Als eine weitere Lösung der Aufgabe der vorliegenden Erfindung wird ausgehend von dem Kommunikationssystem der eingangs genannten Art vorgeschlagen, dass zur Synchronisation der globalen Zeitbasis auf die externe Referenzzeit
- mindestens einer der Teilnehmer ein Zeitsignal der externen Referenzzeit empfängt;
- der mindestens eine Teilnehmer einen Korrektur-Wunschwert zwischen dem empfangenen Zeitsignal und der globalen Zeitbasis ermittelt;
- der mindestens eine Teilnehmer den Korrektur-Wunschwert an die übrigen Teilnehmer des Bussystems überträgt;
- die Teilnehmer des Bussystems in Abhängigkeit des Korrektur-Wunschwerts einen Korrekturwert ermitteln; und
- die Teilnehmer des Bussystems zu dem vorgebbaren Zeitpunkt die Synchronisation der globalen Zeitbasis auf die externe Referenzzeit in Abhängigkeit von dem ermittelten Korrekturwert und der globalen Zeitbasis ausführen.

Gemäß einer vorteilhaften Weiterbildung der vorliegenden Erfindung wird vorgeschlagen, dass das Kommunikationssystem Mittel zur Ausführung des erfindungsgemäßen Verfahrens aufweist.

Als noch eine weitere Lösung der Aufgabe der vorliegenden Erfindung wird ausgehend von dem verteilt arbeitenden Bussystem der eingangs genannten Art vorgeschlagen, dass mit dem Bussystem das erfindungsgemäße Verfahren ausgeführt wird.

Von besonderer Bedeutung ist die Realsierung des erfindungsgemäßen Verfahrens in der Form eines Speicherelements, das für einen Teilnehmer eines Kommunikationssystems, der über ein verteilt arbeitendes Bussystem zum Austausch von Daten mit mindestens einem weiteren Teilnehmer in Verbindung steht, vorgesehen ist. Dabei ist auf dem Speicherelement ein Computerprogramm abgespeichert, das auf einem Rechengerät des Teilnehmers, insbesondere auf einem Mikroprozessor, ablauffähig und zur Ausführung des erfindungsgemäßen Verfahrens geeignet ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Die Erfindung betrifft schließlich auch ein Computerprogramm, das zur Ausführung des erfindungsgemäßen Verfahrens geeignet ist, wenn es auf einem Rechengerät, insbesondere auf einem Mikroprozessor, eines Teilnehmers eines Kommunikationssystems, der über ein verteilt arbeitendes Bussystem zum Austausch von Daten mit mindestens einem weiteren Teilnehmer in Verbindung steht, abläuft. Besonders bevorzugt ist dabei, wenn das Computerprogramm auf einem Speicherelement, insbesondere auf einem Flash-Memory, abgespeichert ist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw.

Darstellung in der Beschreibung bzw. in der Zeichnung. Es zeigen:
- Figur 1: ein erfindungsgemäßes Kommunikationssystem nach einem bevorzugten Ausführungsbeispiel; und
- Figur 2: ein Ablaufdiagramm eines erfindungsgemäßen Verfahrens gemäß einem bevorzugten Ausführungsbeispiel.

### Beschreibung der Ausführungsbeispiele

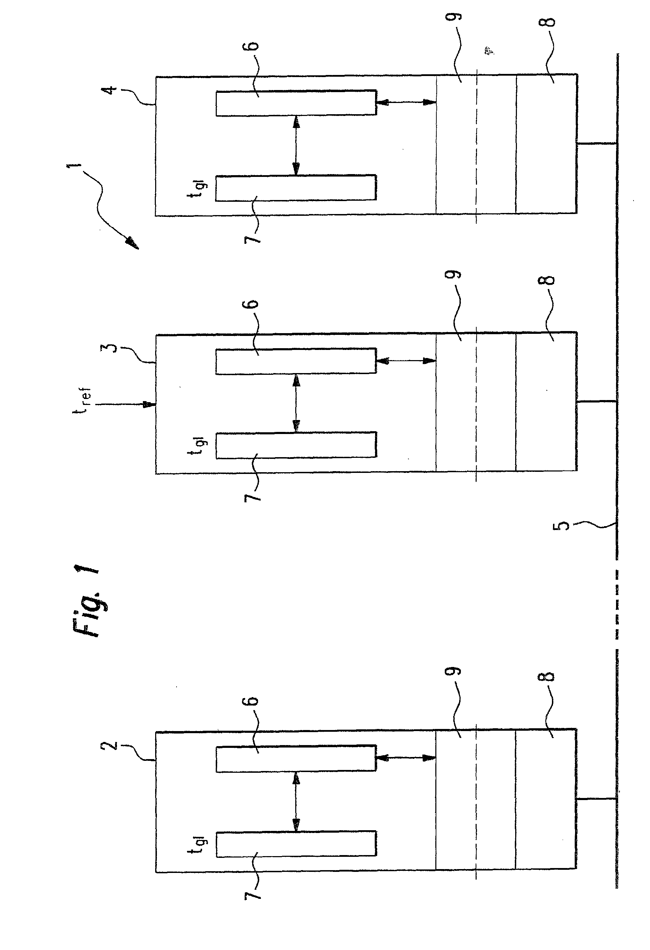

In Figur 1 ist ein erfindungsgemäßes Kommunikationssystem in seiner Gesamtheit mit dem Bezugszeichen 1 bezeichnet. Das Kommunikationssystem 1 umfasst mehrere Teilnehmer 2, 3, 4, die mittels eines verteilt arbeitenden Bussystems 5 zum Austausch von Daten miteinander in Verbindung stehen. Die Teilnehmer 2, 3, 4 sind bspw. Steuergeräte eines Kraftfahrzeugs. Die auszustauschenden Daten sind in Nachrichten enthalten, die von den Teilnehmern 2, 3, 4 über das Bussystem 5 übertragen werden. Für die Teilnehmer 2, 3, 4 des Bussystems 5 liegt eine gemeinsame globale Zeitbasis t_gl vor, die zu einem vorgebbaren Zeitpunkt t_synch auf eine externe Referenzzeit t_ref synchronisiert wird.

Die Teilnehmer 2, 3, 4 umfassen ein Rechengerät (sog. Prozessrechner), der als ein Mikroprozessor 6 ausgebildet ist. Auf dem Mikroprozessor 6 ist ein Computerprogramm ablauffähig, das in einem als ein Flash-Memory ausgebildeten Speicherelement 7, abgespeichert ist. Das Computerprogramm ist zur Ausführung des erfindungsgemäßen Verfahrens geeignet. Das Computerprogramm wird vor oder während der Abarbeitung in den Mikroprozessor 6 geladen. Die Teilnehmer 2, 3, 4 umfassen außerdem einen Kommunikationscontroller 8, der über eine Schnittstelle 9 mit dem Mikroprozessor 6 in Verbindung steht. Der Kommunikationscontroller 8 stellt eine Verbindung zwischen dem Teilnehmer 2, 3, 4 und dem Bussystem 5 her. Alle Teilnehmer 2, 3, 4 des Kommunikationssytems 1 haben Zugriff auf das Bussystem 5, allerdings hat lediglich der Teilnehmer 3 Zugriff auf die externe Referenzzeit t_ref.

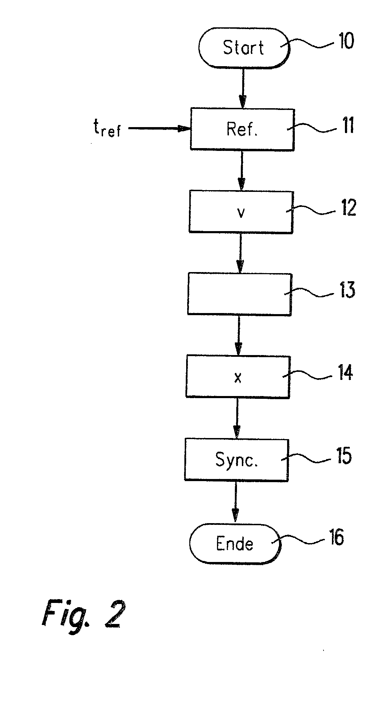

Zur Realisierung der erfindungsgemäß vorgeschlagenen gesicherten Synchronisation der globalen Zeitbasis t_gl auf die externe Referenzzeit t_ref wird ein gesichertes Synchronisationsprotokoll mit den nachfolgenden Schritten vorgeschlagen. Das erfindungsgemäße Verfahren wird anhand der Figur 2 näher erläutert.

Das Verfahren beginnt in einem Funktionsblock 10. Sobald eine Anforderung nach einer externen Synchronisation vorliegt, wird in einem Funktionsblock 11 von dem Teilnehmer 3, der Zugriff auf die externe Referenzzeit t_ref hat, ein Zeitsignal der externen Referenzeit t_ref empfangen. Bei mehreren Teilnehmern eines Kommunikationssytems 1, die Zugriff auf die externe Referenzzeit t_ref haben, ist es selbstverständlich möglich, dass jeder dieser Teilnehmer ein Zeitsignal empfängt und die nachfolgenden Schritte ausführt. Dabei müssen die Teilnehmer, die Zugriff auf die externe Referenzzeit t_ref haben, nicht notwendigerweise synchron arbeiten. Es wäre durchaus denkbar, dass sie nacheinander aufgefordert werden, eine externe Synchronisation auszuführen und die nachfolgenden Schritte für die einzelnen Teilnehmer somit nacheinander ablaufen.

Anhand des empfangenen Zeitsignals der externen Referenzzeit t_ref und der globalen Zeitbasis t_gl wird in dem Teilnehmer 3 durch einen Vergleich der globalen Zeitbasis t_gl mit der externen Referenzzeit t_ref in einem Funktionsblock 12 ein Korrektur-Wunschwert ermittelt. Der Korrektur-Wunschwert wird dann in einem Funktionsblock 13 über das Bussystem 5 an die übrigen Teilnehmer 2, 3, 4 des Kommunikationssystems 1 übertragen. Bei mehreren Teilnehmern, die Zugriff auf die externe Referenzeit t_ref haben, werden in jedem Teilnehmer des Bussystems 5 mit und ohne Zugriff auf die externe Referenzzeit t_ref die Korrektur-Wunschwerte der verschiedenen Teilnehmer mit Zugriff auf die Referenzzeit t_ref als Vektorkomponenten in einem Vektor v abgelegt. Somit steht jedem Teilnehmer 2, 3, 4 des Kommunikationssystems 1, also auch den Teilnehmern 2, 3, 4, die keinen Zugang zu der externen Referenzzeit t_ref haben, ein Vektor v mit den zeitlichen Korrektur-Wunschwerten der Teilnehmer 3, die Zugang zu der externen Referenzzeit t_ref haben, zur Verfügung.

In Abhängigkeit des Korrektur-Wunschwerts des Teilnehmers 3 wird dann in jedem der Teilnehmer 2, 3, 4 des Kommunikatinossystems 1 in einem Funktionsblock 14 ein Korrekturwert x ermittelt. Anschließend wird in einem Funktionsblock 15 in den Teilnehmern 2, 3, 4 zu einem vorgebbaren Zeitpunkt die Synchronisation der globalen Zeitbasis t_gl auf die externe Referenzzeit t_ref in Abhängigkeit von dem ermittelten Korrekturwert x und der globalen Zeitbasis t_gl ausgeführt. In einem Funktionsblock 16 ist das erfindungsgemäße Verfahren beendet.

Die Kommunikationscontroller 8 aller Teilnehmer 2, 3, 4 des Kommunikationssystems 1 werden über Korrektur der globalen Zeitbasis t_gl informiert, stimmen dem einheitlichen Korrekturwert x zu und setzen die externe Synchronisation, d. h. die Korrektur der globalen Zeitbasis t_gl, synchronisiert um.

## Patentansprüche

1. Verfahren zum Austausch von Daten zwischen mindestens zwei Teilnehmern (2, 3, 4), die mittels eines verteilt arbeitenden Bussystems (5) miteinander in Verbindung stehen, wobei die Daten in Nachrichten enthalten sind, die von den Teilnehmern (2, 3, 4) über das Bussystem (5) übertragen werden, und für die Teilnehmer (2, 3, 4) des Bussystems (5) eine gemeinsame globale Zeitbasis (t_gl) vorliegt, die zu einem vorgebbaren Zeitpunkt (t_synch) auf eine externe Referenzzeit (t_ref) synchronisiert wird, **dadurch gekennzeichnet, dass** zur Synchronisation der globalen Zeitbasis (t_gl) auf die externe Referenzzeit (t_ref)
- von mindestens einem der Teilnehmer (3) ein Zeitsignal der externen Referenzeit (t_ref) empfangen wird;
- in dem mindestens einen Teilnehmer (3) ein Korrektur-Wunschwert (v) zwischen dem empfangenen Zeitsignal und der globalen Zeitbasis (t_gl) ermittelt wird;
- der Korrektur-Wunschwert (v) an die übrigen Teilnehmer (2, 4) des Bussystems (5) übertragen wird;
- in den Teilnehmern (2, 3, 4) des Bussystems (5) in Abhängigkeit des Korrektur-Wunschwerts (v) ein Korrekturwert (x) ermittelt wird; und
- in den Teilnehmern (2, 3, 4) des Bussystems (5) zu dem vorgebbaren Zeitpunkt (t_synch) die Synchronisation der globalen Zeitbasis (t_gl) auf die externe Referenzzeit (t_ref) in Abhängigkeit von dem ermittelten Korrekturwert (x) und der globalen Zeitbasis (t_gl) ausgeführt wird.

2. Verfahren nach Anspruch 1, **dadurch gekennzeichnet, dass** die Synchronisation der globalen Zeitbasis (t_gl) auf die externe Referenzzeit (t_ref) durch einen Vergleich der globalen Zeitbasis (t_gl) mit der externen Referenzzeit (t_ref) ausgelöst wird.

3. Verfahren nach Anspruch 1 oder 2, **dadurch gekennzeichnet, dass** der Korrektur-Wunschwert (v) an die übrigen Teilnehmer (2, 4) des Bussystems (5) periodisch übertragen wird.

4. Verfahren nach Anspruch 1 oder 2, **dadurch gekennzeichnet, dass** der Korrektur-Wunschwert (v) an die übrigen Teilnehmer (2, 4) des Bussystems (5) beim Vorliegen eines von Null verschiedenen Korrektur-Wunschwerts (v) übertragen wird.

5. Verfahren nach Anspruch 1 oder 2, **dadurch gekennzeichnet, dass** der Korrektur-Wunschwert (v) an die übrigen Teilnehmer (2, 4) des Bussystems (5) nach Aufforderung durch einen der übrigen Teilnehmer (2, 4) des Bussystems (5) übertragen wird.

6. Verfahren nach einem der Ansprüche 1 bis 5, **dadurch gekennzeichnet, dass** der Korrektur-Wunschwert (v) in einer gesonderten Nachricht aufgenommen und die gesonderte Nachricht an die übrigen Teilnehmer (2, 4) des Bussystems (5) übertragen wird.

7. Verfahren nach einem der Ansprüche 1 bis 5, **dadurch gekennzeichnet, dass** der Korrektur-Wunschwert (v) in einer Kontrollnachricht des Bussystems (5) aufgenommen wird, die an die übrigen Teilnehmer (2, 4) des Bussystems (5) übertragen wird.

8. Verfahren nach einem der Ansprüche 1 bis 5, **dadurch gekennzeichnet, dass** der Korrektur-Wunschwert (v) in den vorhandenen Kontrolldaten einer Datennachricht des Bussystems (5) aufgenommen wird, die an die übrigen Teilnehmer (2, 4) des Bussystems (5) übertragen wird.

9. Verfahren nach einem der Ansprüche 1 bis 8, **dadurch gekennzeichnet, dass** der Korrekturwert (x) in den Teilnehmern (2, 3, 4) des Bussystems (5) mit einer Fehlerkorrektur in Abhängigkeit des Korrektur-Wunschwerts (v) ermittelt wird.

10. Verfahren nach Anspruch 9, **dadurch gekennzeichnet, dass** der Korrekturwert (x) in den Teilnehmern (2, 3, 4) des Bussystems (5) mit einer byzantinischen Fehlerkorrektur in Abhängigkeit des Korrektur-Wunschwerts (v) ermittelt wird.

11. Verfahren nach einem der Ansprüche 1 bis 10, **dadurch gekennzeichnet, dass** die Synchronisation der globalen Zeitbasis (t_gl) auf die externe Referenzzeit (t_ref) durch Addition des Korrekturwerts (x) zu der globalen Zeitbasis (t_gl) ausgeführt wird.

12. Verfahren nach einem der Ansprüche 1 bis 11, **dadurch gekennzeichnet, dass** die Synchronisation der globalen Zeitbasis (t_gl) auf die externe Referenzzeit (t_ref) durch Multiplikation des Korrekturwerts (x) mit der globalen Zeitbasis (t_gl) ausgeführt wird.

13. Verfahren nach einem der Ansprüche 1 bis 12, **dadurch gekennzeichnet, dass** der vorgebbare Zeitpunkt (t_synch) zur Synchronisation der globalen Zeitbasis (t_gl) auf die externe Referenzzeit (t_ref) explizit vorgegeben wird.

14. Verfahren nach Anspruch 13, **dadurch gekennzeichnet, dass** die Synchronisation der globalen Zeitbasis (t_gl) auf die externe Referenzzeit (t_ref) durch eine Übergabe des Korrekturwerts (x) an einen Synchronisationsalgorithmus ausgelöst wird, wobei die Übergabe zu einem explizit vorgegebenen Zeitpunkt (t_synch) erfolgt.

15. Kommunikationssystem (1) mit mindestens zwei Teilnehmern (2, 3, 4) und einem verteilt arbeitenden Bussystem (5), über das die Teilnehmer (2, 3, 4) miteinander in Verbindung stehen, zum Austausch von Daten zwischen den Teilnehmern (2, 3, 4), wobei die Daten in Nachrichten enthalten sind, die von den Teilnehmern (2, 3, 4) über das Bussystem (5) übertragbar sind, und für die Teilnehmer (2, 3, 4) des Bussystems (5) eine gemeinsame globale Zeitbasis (t_gl) vorliegt, die zu einem vorgebbaren Zeitpunkt (t_synch) auf eine externe Referenzzeit (t_ref) synchronisierbar ist, **dadurch gekennzeichnet, dass** zur Synchronisation der globalen Zeitbasis (t_gl) auf die externe Referenzzeit (t_ref)
- mindestens einer der Teilnehmer (3) ein Zeitsignal der externen Referenzeit (t_ref) empfängt;
- der mindestens eine Teilnehmer (3) einen Korrektur-Wunschwert (v) zwischen dem empfangenen Zeitsignal und der globalen Zeitbasis (t_gl) ermittelt;
- der mindestens eine Teilnehmer (3) den Korrektur-Wunschwert (v) an die übrigen Teilnehmer (2, 4) des Bussystems (5) überträgt;
- die Teilnehmer (2, 3, 4) des Bussystems (5) in Abhängigkeit des Korrektur-Wunschwerts (v) einen Korrekturwert (x) ermitteln; und
- die Teilnehmer (2, 3, 4) des Bussystems (5) zu dem vorgebbaren Zeitpunkt (t_synch) die Synchronisation der globalen Zeitbasis (t_gl) auf die externe Referenzzeit (t_ref) in Abhängigkeit von dem ermittelten Korrekturwert (x) und der globalen Zeitbasis (t_gl) ausführen.

16. Kommunikationssystem (1) nach Anspruch 15, **dadurch gekennzeichnet, dass** es Mittel zur Ausführung eines Verfahrens nach einem der Ansprüche 2 bis 14 aufweist.

17. Verteilt arbeitendes Bussystem (5) zum Austausch von Daten zwischen mindestens zwei Teilnehmern (2, 3, 4) eines Kommunikationssytems (1), **dadurch gekennzeichnet, dass** mit dem Bussystem (5) ein Verfahen nach einem der Ansprüche 1 bis 14 ausgeführt wird.

18. Speicherelement (7), insbesondere Read-Only-Memory, Random-Access-Memory oder Flash-Memory, für einen Teilnehmer (3) eines Kommunikationssystems (1), der über ein verteilt arbeitendes Bussystem (5) zum Austausch von Daten mit mindestens einem weiteren Teilnehmer (2, 4) in Verbindung steht, auf dem ein Computerprogramm abgespeichert ist, das auf einem Rechengerät des Teilnehmers (3), insbesondere auf einem Mikroprozessor (6), ablauffähig und zur Ausführung eines Verfahrens nach einem der Ansprüche 1 bis 14 geeignet ist.

19. Computerprogramm, **dadurch gekennzeichnet, dass** es zur Ausführung eines Verfahrens nach einem der Ansprüche 1 bis 14 geeignet ist, wenn es auf einem Rechengerät, insbesondere auf einem Mikroprozessor (6), eines Teilnehmers (3) eines Kommunikationssystems (1), der über ein verteilt arbeitendes Bussystem (5) zum Austausch von Daten mit mindestens einem weiteren Teilnehmer (2, 4) in Verbindung steht, abläuft.

20. Computerprogramm nach Anspruch 19, **dadurch gekennzeichnet, dass** es auf einem Speicherelement (7), vorzugsweise auf einem Flash-Memory, abgespeichert ist.
